# EUROPÄISCHE PATENTSCHRIFT

(11) **EP 3 369 311 B1**
(45) Veröffentlichungstag und Bekanntmachung des Hinweises auf die Patenterteilung: **06.05.2020**
(21) Anmeldenummer: 17158853.6
(22) Anmeldetag: 02.03.2017
(51) Int. Cl.: A01K 5/02, A01K 9/00

(54) **VERFAHREN ZUM KALIBRIEREN EINES TRÄNKEAUTOMATEN UND TRÄNKEAUTOMAT**
METHOD FOR CALIBRATING A DRINKING MACHINE AND DRINKING MACHINE
PROCÉDÉ DE CALIBRAGE D'UN ABREUVOIR AUTOMATIQUE ET ABREUVOIR AUTOMATIQUE

(43) Veröffentlichungstag der Anmeldung: 05.09.2018
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- EP-B1- 1 067 833
- DE-A1-102008 050 715
- DE-B3-102011 009 076
- DE-U1-202014 102 419

## Beschreibung

Die Erfindung betrifft ein Verfahren zum Kalibrieren eines Tränkeautomaten und einen Tränkeautomaten, der zur Ausführung dieses Verfahrens ausgebildet ist. Tränkeautomaten zur Aufzucht und Fütterung von Nutztieren, insbesondere von Kälbern, sind weit verbreitet, um den Tieren das benötigte Futtermittel jederzeit und unter optimalen Bedingungen zur Verfügung stellen zu können. Hierzu weisen die Tränkeautomaten einen Anmischbehälter auf, in dem bedarfsgerechte Mengen eines Futtermittels zubereitet werden, meist individuell auf einzelne Tiere zugeschnitten, die in einen mit dem Tränkeautomaten verbundenen Abrufstand eintreten. Für eine optimale Versorgung der Tiere ist es dabei wichtig, die Tränkekomponenten, beispielsweise Wasser und Milchpulver, exakt im vorgesehenen Mischungsverhältnis zu verwenden. Darüber hinaus ist eine möglichst exakte Einhaltung und Erfassung der insgesamt verabreichten Tränkemenge von Interesse. Um die Mengen der einzelnen, dem Anmischbehälter zugeführten Tränkekomponenten exakt steuern zu können, ist eine Kalibrierung des Tränkeautomaten bzw. der zum Zuführen der einzelnen Tränkekomponenten verwendeten Zuführeinrichtungen bekannt.

Aus der Druckschrift EP 1 067 833 B1 ist ein Verfahren zum automatischen Kalibrieren eines Tränkeautomaten bekannt geworden, bei dem dem Anmischbehälter eine Waage zugeordnet ist. Zur Kalibrierung werden die Tränkekomponenten getrennt voneinander zeitlich aufeinanderfolgend dem Anmischbehälter zugeführt. Gleichzeitig wird bestimmt, welche Zeitdauer eine bestimmte Menge Gewicht benötigt. Aus Zeitdauer und Gewicht wird ein Kalibrierwert für die jeweilige Tränkekomponente berechnet.

Aus der Druckschrift DE 10 2011 009 076 B3 ist ein ähnliches Verfahren zur Kalibrierung eines Tränkeautomaten bekannt geworden, das ebenfalls eine Waage einsetzt. Diese ist jedoch nicht dem Anmischbehälter, sondern dem gesamten Tränkeautomaten zugeordnet und misst dessen Gesamtgewicht. Zum Kalibrieren wird dem Anmischbehälter ein Soll-Gewicht von Wasser zugeführt. Dann wird das Ist-Gewicht des Wassers bestimmt. Außerdem ist ein stufenlos arbeitender Füllstandssensor in dem Anmischbehälter vorgesehen, mit dem das Volumen der in dem Anmischbehälter befindlichen Flüssigkeit bestimmt werden kann. Auch bei diesem bekannten Verfahren werden aus den Messwerten Kalibrierfaktoren berechnet. Die zusätzliche Messung des Volumens kann für eine Überprüfung herangezogen werden, ob die Volumenänderung beim Mischen von Wasser mit Milchpulver den Erwartungen entspricht.

Davon ausgehend ist es die Aufgabe der Erfindung, ein Verfahren zum Kalibrieren eines Tränkeautomaten zur Verfügung zu stellen, das besonders einfach und mit konstruktiv wenig aufwendigen Tränkeautomaten ausgeführt werden kann, sowie einen solchen Tränkeautomaten.

Diese Aufgabe wird gelöst durch das Verfahren mit den Merkmalen des Anspruchs 1 und mit dem Tränkeautomat nach Anspruch 9. Vorteilhafte Ausgestaltungen sind in den sich anschließenden Unteransprüchen angegeben.

Das Verfahren dient zum Kalibrieren eines Tränkeautomaten, der mindestens eine Zuführeinrichtung zum Befüllen eines Anmischbehälters mit einer Tränkekomponente und eine elektronische Steuerung aufweist, die dazu ausgebildet ist, zum Zuführen einer gewünschten Befüllmenge der Tränkekomponente einen Befüllzeitraum für die Zuführeinrichtung vorzugeben, wobei das Verfahren die folgenden Schritte aufweist:
- Zuführen der Tränkekomponente für einen vorgegebenen Befüllzeitraum,
- Ermitteln einer in dem vorgegebenen Befüllzeitraum zugeführten Befüllmenge,
- Berechnen eines Kalibrierungsfaktors, der ein Verhältnis aus der ermittelten Befüllmenge und dem vorgegebenen Befüllzeitraum angibt,
wobei der Anmischbehälter mit einer Pumpe zum Fördern von in dem Anmischbehälter hergestellter Tränke verbunden ist und die Pumpe eine bekannte Förderleistung aufweist,
wobei zum Ermitteln der in dem vorgegebenen Befüllzeitraum zugeführten Befüllmenge der Anmischbehälter mit der Pumpe entleert und die hierfür erforderliche Förderzeit gemessen wird.

Der Tränkeautomat, mit dem das Verfahren ausgeführt werden kann, kann relativ einfach aufgebaut sein. Insbesondere benötigt er keine Waage, um die mit der Zuführeinrichtung zugeführte Befüllmenge einer Tränkekomponente zu ermitteln. Im Betrieb des Tränkeautomaten gibt die elektronische Steuerung wie bei herkömmlichen Tränkeautomaten einen Befüllzeitraum für die Zuführeinrichtung jeder Tränkekomponente vor. Die Befüllmenge wird also über eine einfache Zeitsteuerung vorgegeben.

Für die Kalibrierung einer Zuführeinrichtung wird zunächst für einen vorgegebenen Befüllzeitraum die jeweilige Tränkekomponente dem Anmischbehälter zugeführt. Dieser vorgegebene Befüllzeitraum ist so gewählt, dass eine hinreichende Befüllmenge in den Anmischbehälter eingegeben wird, ohne dass dieser überläuft. Auf die genaue Befüllmenge kommt es dabei zunächst nicht an.

Anschließend wird ermittelt, welche Befüllmenge in dem vorgegebenen Befüllzeitraum dem Anmischbehälter zugeführt wurde. Hierzu wird eine Pumpe, die eine bekannte Förderleistung aufweist und die mit dem Anmischbehälter verbunden ist, eingesetzt. Mit der Pumpe wird der Anmischbehälter entleert. Die hierfür erforderliche Förderzeit der Pumpe wird gemessen. Anhand der bekannten Förderleistung, in der Regel angegeben als Fördermenge pro Zeiteinheit, wird die in der Förderzeit von der Pumpe geförderte Fördermenge ermittelt. Diese Menge entspricht der in dem vorgegebenen Befüllzeitraum in den Anmischbehälter eingegebenen Befüllmenge.

Dass der Anmischbehälter mit der Pumpe entleert wird, bedeutet nicht notwendigerweise, dass der Anmischbehälter vollständig entleert wird. Es kommt lediglich darauf an, den Anmischbehälter so weit zu entleeren, dass die zuvor in dem vorgegebenen Befüllzeitraum zugeführte Menge der Tränkekomponente von der Pumpe gefördert wurde. Hierzu kann in der Praxis zum Beispiel eine Füllstandselektrode oder eine sonstige Messeinrichtung eingesetzt werden, die das Erreichen bzw. Unterschreiten eines bestimmten Füllstands im Anmischbehälter erfasst. Dieser Füllstand kann einem vollständig entleerten oder einem fast vollständig entleerten Zustand des Anmischbehälters entsprechen. Bei Verwendung einer solchen Messeinrichtung kann in einem vorbereitenden Verfahrensschritt sichergestellt werden, dass der Anmischbehälter vor dem Zuführen der Tränkekomponenten exakt bis zu dem genannten Füllstand entleert ist. Hierzu genügt es, den Anmischbehälter mit einer Flüssigkeit, bevorzugt mit der Tränkekomponente, für die die Kalibrierung durchgeführt werden soll, zu befüllen und die Flüssigkeit anschließend bis zum Ansprechen der Messeinrichtung mit der Pumpe abzupumpen. Anschließend kann die Tränkekomponenten wie beschrieben zugeführt und mit der Pumpe wiederum bis zum Ansprechen der Messeinrichtung abgepumpt werden. Dadurch wird sichergestellt, dass während der beim Entleeren des Anmischbehälters mit der Pumpe gemessenen Förderzeit genau die in dem Befüllzeitraum zugeführte Menge der Tränkekomponente gefördert wurde.
Daher kann ein Kalibrierungsfaktor berechnet werden, der das Verhältnis aus der ermittelten Befüllmenge und dem vorgegebenen Befüllzeitraum angibt. Der Kalibrierungsfaktor kann insbesondere in der Einheit Volumen pro Zeit, beispielsweise in Milliliter pro Sekunde, angegeben werden.

Der auf diese Weise ermittelte Kalibrierungsfaktor kann in der elektronischen Steuerung hinterlegt und bei einem nachfolgenden Anmischvorgang verwendet werden, um den Befüllzeitraum für die betreffende Tränkekomponente so vorzugeben, dass dem Anmischbehälter die gewünschte Befüllmenge zugeführt wird.

Die Pumpe ist mit dem Anmischbehälter verbunden und kann im Betrieb des Tränkeautomaten verwendet werden, um die in dem Anmischbehälter hergestellte Tränke zu fördern, insbesondere zu einer in einem Abrufstand angeordneten Abgabeeinrichtung, zum Beispiel in Form eines Saugnuckels. Die Pumpe kann ebenfalls in dem Abrufstand angeordnet sein.

Der Saugnuckel oder eine sonstige Abgabeeinrichtung des Abrufstands ist über eine Leitung mit dem Anmischbehälter verbunden. Die Pumpe kann in dieser Leitung angeordnet sein. Alternativ kann die Pumpe in einer Abzweigleitung des Abrufstands angeordnet sein, die die Leitung vom Anmischbehälter zur Abgabevorrichtung über die Abgabevorrichtung hinaus fortsetzt. In diesem Fall kann mit der in der Abzweigleitung angeordneten Pumpe die Tränke gezielt bis zur Abgabeeinrichtung gefördert werden. Dann kann die Pumpe abgeschaltet werden und ein im Abrufstand befindliches Tier kann die Tränke allein durch Saugen aufnehmen und aus dem Anmischbehälter zur Abgabeeinrichtung fördern.

Um das Kalibrierverfahren ausführen zu können, ist die elektronische Steuerung des Tränkeautomaten mit der Pumpe verbunden, sodass die elektronische Steuerung die Förderzeit der Pumpe erfassen kann. Ebenfalls vorgesehen ist ein Füllstandssensor im Anmischbehälter, der die vollständige oder fast vollständige Entleerung des Anmischbehälters anzeigt. Die für die Kalibrierung zu messende Förderzeit der Pumpe wird dann als Zeitraum zwischen dem Inbetriebnehmen der Pumpe und dem Ansprechen des Füllstandssensors erfasst.

Voraussetzung für das Verfahren zum Kalibrieren des Tränkeautomaten ist, dass die Förderleistung der Pumpe bekannt ist. Im einfachsten Fall kann diesbezüglich mit Angaben des Herstellers der Pumpe gearbeitet werden, beispielsweise bei Pumpen, deren Förderleistung proportional zur Drehzahl eines Antriebs ist und die mit einer beispielsweise an die Frequenz eines elektrischen Versorgungsnetzes gekoppelten, festen Drehzahl betrieben werden. In einer Ausgestaltung des Verfahrens ist jedoch vorgesehen, die Förderleistung der Pumpe in einem den erläuterten Verfahrensschritten vorausgehenden Kalibrierungsschritt zu ermitteln, indem eine definfierte Flüssigkeitsmenge mit der Pumpe aus dem Anmischbehälter gefördert und die hierfür benötigte Förderzeit gemessen wird. Die Messung der Förderzeit kann dabei auf die gleiche Weise erfolgen, wie vorstehend erläutert. Es muss lediglich eine definierte Flüssigkeitsmenge in den Anmischbehälter gegeben werden, was im einfachsten Beispiel manuell mit einem Messbecher folgen kann.

Insbesondere für eine automatische Ausführung des Kalibrierungsschritts für die Förderleistung der Pumpe ist in einer Ausgestaltung vorgesehen, dass in dem Anmischbehälter zwei Füllstandssensoren in einem vorgegebenen Abstand voneinander angeordnet sind, der der definierten Flüssigkeitsmenge entspricht, wobei die Förderzeit beim Fördern der Flüssigkeit aus dem Anmischbehälter anhand von aufeinanderfolgenden Signalen der Füllstandssensoren ermittelt wird. Die Füllstandssensoren können einfache Füllstandselektroden sein, die eine einfache "0/1-Infor-mation" liefern, je nachdem, ob der Füllstand der Flüssigkeit in dem Anmischbehälter oberhalb oder unterhalb des betreffenden Füllstandssensors angeordnet ist. Bei dieser Ausgestaltung kommt es also nicht darauf an, welche Flüssigkeitsmenge insgesamt in dem Anmischbehälter vorhanden ist, da die für den Kalibrierungsschritt für die Förderleistung der Pumpe erforderliche, definierte Befüllmenge als Teilmenge der insgesamt im Anmischbehälter befindlichen Flüssigkeit ausgestaltet ist. Beispielsweise können die beiden Füllstandssensoren in einem Abstand voneinander angeordnet sein, der einem Volumen von 350 ml entspricht. Um die Förderleistung der Pumpe zu kalibrieren, kann dann aus dem zeitlichen Abstand des Ansprechens bzw. Abfallens der Füllstandssensoren beim aufeinanderfolgenden Unterschreiten der jeweiligen Füllstände unmittelbar die Förderzeit gemessen werden, die für das Abpumpen der 350 ml benötigt wird. Dies erlaubt, die Förderleistung der Pumpe beispielsweise in der Einheit Milliliter pro Sekunde zu bestimmen und diesen Wert in der elektronischen Steuerung des Tränkeautomaten zu hinterlegen, damit er für die vorstehend erläuterte Kalibrierung einer Zuführeinrichtung des Tränkeautomaten verwendet werden kann. Das Verfahren kann so gesteuert werden, dass beim Ansprechen bzw. Abfallen des ersten Füllstandssensors die Pumpe zunächst gestoppt wird. Die mit dem erneuten Anschalten der Pumpe beginnende Förderzeit umfasst dann auch die Anlaufzeit der Pumpe. Dies kann zu einer genaueren Kalibrierung führen, da die beim Abpumpen der in dem Befüllzeitraum zugeführten Tränkemenge bei der Kalibrierung ebenfalls Anlaufeffekte einfließen, wenn die Förderzeit ab dem Moment des Einschaltens der Pumpe gemessen wird.

In einer Ausgestaltung des Verfahrens ist die Pumpe eine Schlauchpumpe. Schlauchpumpen sind besonders robust und einfach zu reinigen. Sie werden daher häufig in Abrufständen eingesetzt. Mit zunehmendem Verschleiß insbesondere des Schlauchs verändert sich jedoch die Förderleistung einer Schlauchpumpe, sodass der erläuterte Kalibrierungsschritt für die Förderleistung der Schlauchpumpe besonders wichtig ist und von Zeit zu Zeit wiederholt werden sollte.

In einer Ausgestaltung ist die Tränkekomponente eine Flüssigkeit. Dabei kann es sich insbesondere um Wasser handeln, und zwar entweder um bereits zuvor temperiertes Wasser oder um Heißwasser oder Kaltwasser. In diesem Fall bilden Heißwasser und Kaltwasser zwei mit jeweils einer Zuführeinrichtung zugeführte Tränkekomponenten, deren Mischungsverhältnis die gewünschte Temperatur bestimmt. Ebenfalls möglich ist, dass die Flüssigkeit Vollmilch ist, ggf. kann hierfür eine gesonderte Zuführeinrichtung vorgesehen sein.

In einer Ausgestaltung weist die Zuführeinrichtung ein Ventil auf, das zum Befüllen des Anmischbehälters für den vorgegebenen Befüllzeitraum geöffnet wird. Das Ventil kann insbesondere in einer Wasserleitung für Kaltwasser, Heißwasser oder bereits vortemperiertes Wasser angeordnet sein. Derartige Zuführeinrichtungen weisen unter Umständen stark schwankende bzw. von der Anwendungssituation abhängige Förderleistungen auf, insbesondere abhängig vom Druck in der jeweiligen Wasserleitung. Die Kalibrierung mit dem erfindungsgemäßen Verfahren ist daher besonders sinnvoll.

In einer Ausgestaltung ist die Tränkekomponente ein Pulver, wobei vor dem Entleeren des Anmischbehälters zusätzlich zu dem Pulver eine Flüssigkeit zugeführt und mit dem Pulver vermischt wird, wobei die Befüllmenge des Pulvers aus einer bekannten Änderung des Volumens des Flüssigkeits-Pulver-Gemischs relativ zum Volumen der Flüssigkeit ermittelt wird. Die zusätzlich zu dem Pulver zugeführte Flüssigkeit kann bevorzugt vor dem Zuführen des Pulvers in den Anmischbehälter gegeben werden, um Verklebungen des Pulvers entgegenzuwirken. Die Menge der zugeführten Flüssigkeit kann dabei exakt vorgegeben werden, insbesondere wenn die Zuführeinrichtung für die Flüssigkeit bereits mit dem erfindungsgemäßen Verfahren kalibriert worden ist. Mit der Pumpe wird das Volumen des Flüssigkeits-Pulver-Gemischs ermittelt, in dem der Anmischbehälter nach dem Herstellen des Gemischs entleert wird. Aus dem Volumen des Gemischs kann dann auf die Befüllmenge mit dem Pulver zurückgerechnet werden, um die Zuführeinrichtung für das Pulver zu kalibrieren. Dies ist zum Beispiel anhand des sogenannten Volumenfaktors möglich, der für viele pulverförmige Stoffe wie zum Beispiel Milchpulver bekannt ist. Beispielsweise kann es für ein bestimmtes Milchpulver bekannt sein, dass 1 ml Wasser gemischt mit 1 g Milchpulver eine Tränkemenge von 1,7 ml ergibt.

In einer Ausgestaltung weist die Zuführeinrichtung eine Fördereinrichtung auf, die zum Befüllen des Anmischbehälters für den vorgegebenen Befüllzeitraum aktiviert wird. Bei der Fördereinrichtung kann es sich beispielsweise um eine Förderpumpe handeln, die insbesondere für Flüssigkeiten geeignet ist. Handelt es sich bei der Tränkekomponente um ein Pulver, kann die Fördereinrichtung beispielsweise eine Förderschnecke sein.

Die oben angegebene Aufgabe wird ebenfalls gelöst durch den Tränkeautomaten mit den Merkmalen des Anspruchs 9. Vorteilhafte Ausgestaltungen sind in den sich anschließenden Unteransprüchen angegeben.

Der Tränkeautomat hat mindestens eine Zuführeinrichtung zum Befüllen eines Anmischbehälters mit einer Tränkekomponente und eine elektronische Steuerung, die dazu ausgebildet ist, zum Zuführen einer gewünschten Befüllmenge der Tränkekomponente einen Befüllzeitraum für die Zuführeinrichtung vorzugeben und zum Kalibrieren des Tränkeautomaten die folgenden Schritte auszuführen:
- Zuführen der Tränkekomponente für einen vorgegebenen Befüllzeitraum,
- Ermitteln einer in dem vorgegebenen Befüllzeitraum zugeführten Befüllmenge,
- Berechnen eines Kalibrierungsfaktors, der ein Verhältnis aus der ermittelten Befüllmenge und dem vorgegebenen Befüllzeitraum angibt,
wobei der Anmischbehälter mit einer Pumpe zum Fördern von in dem Anmischbehälter hergestellter Tränke verbunden ist und die Pumpe eine bekannte Förderleistung aufweist,
wobei zum Ermitteln der in dem vorgegebenen Befüllzeitraum zugeführten Befüllmenge der Anmischbehälter mit der Pumpe entleert und die hierfür erforderliche Förderzeit gemessen wird.

Zur Erläuterung der Merkmale und Vorteile des Tränkeautomaten wird auf die vorstehenden Erläuterungen des Verfahrens verwiesen, die entsprechend gelten. Ein besonderer Vorteil des Tränkeautomaten ist sein einfacher Aufbau; insbesondere wird keine Waage benötigt.

In einer Ausgestaltung ist die Pumpe eine Schlauchpumpe. Auch hierzu wird auf die vorstehenden Erläuterungen des korrespondierenden Verfahrens verwiesen.

In einer Ausgestaltung ist die elektronische Steuerung dazu ausgebildet, ein Verfahren nach einem der Ansprüche 2, 3 oder 5 bis 8 auszuführen. Hierzu wird auf die vorstehenden Erläuterungen der jeweiligen Verfahren verwiesen, die entsprechend gelten.

Nachfolgend wird die Erfindung anhand eines in Figuren dargestellten Ausführungsbeispiels näher erläutert. Es zeigen:
- Fig. 1: einen Tränkeautomaten mit einem Abrufstand in einer schematischen Darstellung,
- Fig. 2: ein Diagramm zum Ablauf eines Kalibrierungsverfahrens, mit dem eine Zuführeinrichtung des Tränkeautomaten kalibriert wird,
- Fig. 3: ein Diagramm zum Ablauf eines Kalibrierungsverfahrens, mit dem die Förderleistung einer Pumpe kalibriert wird.

Der Tränkeautomat 10 weist einen Anmischbehälter 12, einen Vorratsbehälter 14 für Milchpulver, eine Wasserleitung 16 und eine elektronische Steuerung 18 auf. Ein Auslauf 20 des Anmischbehälters 12 ist über eine Leitung 22 mit dem Saugnuckel 28 eines Abrufstands 24 verbunden. Von der Leitung 22 zweigt kurz vor dem Saugnuckel 28 eine Abzweigleitung 30 ab, die zu einer Schlauchpumpe 26 führt. Die Schlauchpumpe 26 ist eine Pumpe zum Fördern von in dem Anmischbehälter 24 hergestellter Tränke. Sie weist eine bekannte Förderleistung auf, fördert pro Zeiteinheit also eine bestimmte Flüssigkeitsmenge.

Der Vorratsbehälter 14 für Milchpulver weist unten eine Förderschnecke 40 auf, mit der Milchpulver aus dem Vorratsbehälter 14 in den Anmischbehälter 12 gefördert werden kann. Die Förderschnecke 40 ist eine Zuführeinrichtung für die Tränkekomponente Milchpulver.

In der Wasserleitung 16 ist ein Ventil 38 angeordnet, mit dem die Wasserzufuhr zum Anmischbehälter 12 gesteuert werden kann. Im Beispiel kann über die Wasserleitung 16 richtig temperiertes Wasser in den Anmischbehälter 12 eingegeben werden. Möglich ist auch eine Verwendung von zwei getrennten Wasserleitungen, die jeweils ein Ventil aufweisen, einmal für Heißwasser und einmal für Kaltwasser. Die Wasserleitung 16 mit Ventil 38 ist eine Zuführeinrichtung für die Tränkekomponente Wasser.

In dem Anmischbehälter 12 ist ein Rührwerk 32 angeordnet, mit dem die zugeführten Tränkekomponenten zum Herstellen der fertigen Tränke vermischt werden können. Außerdem weist der Anmischbehälter 12 einen unteren Füllstandssensor 34 und einen oberen Füllstandssensor 36 auf, zwischen denen ein definierter Abstand besteht, der einem definierten Flüssigkeitsvolumen entspricht.

Die elektronische Steuerung 18 steuert alle für den Betrieb und die Kalibierung des Tränkeautomaten 10 vorgesehenen Abläufe. Sie ist, wie durch die gestrichelten Linien dargestellt, mit der Förderschnecke 40, dem Rührwerk 32, dem unteren Füllstandssensor 34, dem oberen Füllstandssensor 36, dem Ventil 38 und der Schlauchpumpe 26 verbunden und kann diese Elemente steuern bzw. im Falle der beiden Füllstandssensoren 34, 36 die von diesen zur Verfügung gestellten Signale auswerten.

Im Betrieb, d.h. für die Fütterung von Nutztieren, gibt die elektronische Steuerung 38 einen Befüllzeitraum für die Förderschnecke 40 und für das Ventil 38 vor, sodass die entsprechenden Befüllmengen von Milchpulver und Wasser in den Anmischbehälter eingegeben werden. Gleichzeitig oder anschließend wird das Rührwerk 32 angesteuert, um die Tränkekomponenten zu durchmischen und die Tränke herzustellen. Nach dem Anmischvorgang kann die fertige Tränke von der Schlauchpumpe 26 aus dem Anmischbehälter 12 gefördert werden, idealerweise bis etwa zum Saugnuckel 28 bzw. bis zu der kurz davor angeordneten Verzweigung zur Abzweigleitung 30. Anschließend kann ein Nutztier, insbesondere ein Kalb, durch Saugen am Saugnuckel 28 die Tränke saufen, bis der Anmischbehälter 12 entleert ist.

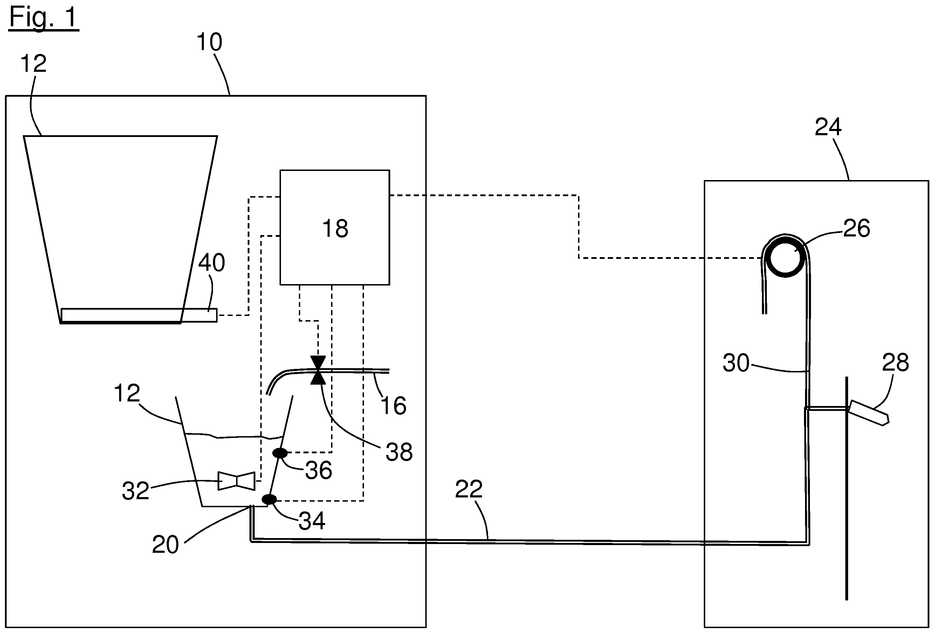

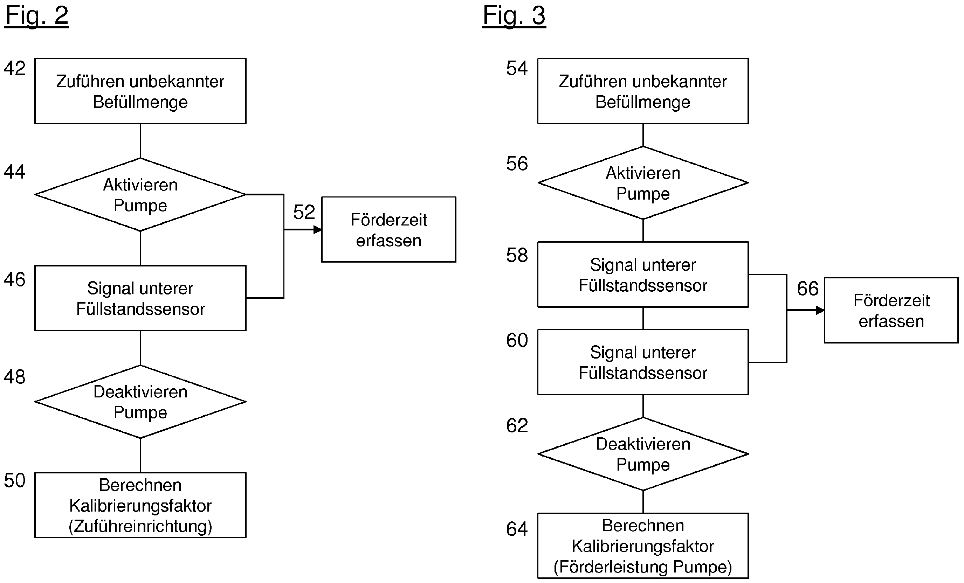

Die erfindungsgemäße Kalibrierung des Tränkeautomaten wird anhand der Figuren 2 und 3 erläutert. In der Fig. 2 wird dabei von einer bekannten Förderleistung der Pumpe, d.h. im Beispiel der Fig. 1 der Schlauchpumpe 26, ausgegangen. Insbesondere kann diese Förderleistung aus einem vorherigen Kalibriervorgang bekannt sein. Ein entsprechender Kalibrierungsfaktor ist in der elektronischen Steuerung 18 hinterlegt. Er gibt die Förderleistung der Schlauchpumpe 18 an, insbesondere in der Einheit Milliliter pro Sekunde.

Um den Tränkeautomaten 10 bzw. eine der darin enthaltenen Zuführeinrichtungen zu kalibrieren, wird im ersten Schritt 42 zunächst mit der Zuführeinrichtung eine unbekannte Befüllmenge in den Anmischbehälter 12 eingegeben. Soll beispielsweise die Zuführeinrichtung für Wasser kalibriert werden, wird hierzu das Ventil 38 für einen vorgegebenen Befüllzeitraum geöffnet. Auf die genaue Befüllmenge kommt es im Schritt 42 nicht an. Der Befüllzeitraum wird jedoch so gewählt, dass der Anmischbehälter 12 für eine aussagekräftige Messung der zugeführten Befüllmenge hinreichend gefüllt ist, jedoch nicht überläuft. Wahlweise kann mit Hilfe des oberen Füllstandssensors 36 überprüft werden, ob eine hinreichende Flüssigkeitsmenge zugeführt wurde.

Anschließend wird im Schritt 44 die Schlauchpumpe 26 aktiviert, und zwar so lange, bis der untere Füllstandssensor 34 im Schritt 46 ein Signal abgibt. Das Signal zeigt an, dass der Füllstand im Anmischbehälter 12 abgesunken ist auf ein Niveau unterhalb der Position des zweiten Füllstandssensors 34.

Wie im Schritt 52 gezeigt, erfasst die elektronische Steuerung 18 die Zeit vom Aktivieren der Pumpe im Schritt 44 bis zum Signal des unteren Füllstandssensors 34 im Schritt 46, also die für das Entleeren des Anmischbehälters 12 erforderliche Förderzeit.

Im Schritt 48 wird die Schlauchpumpe 26 deaktiviert. Im Schritt 50 wird ein Kalibrierungsfaktor berechnet. Hierzu wird auf Grundlage der im Schritt 52 erfassten Förderzeit und der bekannten Förderleistung der Schlauchpumpe 26 berechnet, welche Fördermenge von der Schlauchpumpe 26 gefördert wurde. Diese entspricht der im Schritt 42 zugeführten Befüllmenge. Der berechnete Kalibrierungsfaktor gibt das Verhältnis aus der auf diese Weise ermittelten Befüllmenge und dem im Schritt 42 vorgegebenen Befüllzeitraum an.

Wird später eine Tränke zubereitet, kann der Befüllzeitraum der zuvor kalibrierten Zuführeinrichtung entsprechend dem ermittelten Kalibrierungsfaktor gesteuert werden, um die gewünschte Befüllmenge zuzuführen.

Die anhand der Fig. 2 erläuterte Kalibrierung ist ebenfalls möglich für andere Tränkekomponenten, insbesondere für das im Vorratsbehälter 14 enthaltene Milchpulver. In diesem Fall wird für die Kalibrierung zusätzlich zu dem Milchpulver eine bekannte Menge Wasser in den Anmischbehälter 12 eingefüllt. Anschließend wird, wie zum Schritt 42 erläutert, eine unbekannte Befüllmenge des Milchpulvers in den Anmischbehälter 12 eingegeben und mit dem Wasser vermischt. Wie zuvor erläutert, wird dann die Fördermenge der Schlauchpumpe 26 beim Entleeren des Anmischbehälters 12 bestimmt. Diese entspricht dem Volumen der fertigen Tränke. Unter Berücksichtigung der bekannten Volumenänderung durch Hinzufügen einer bestimmten Menge Milchpulver zu der vorgegebenen Flüssigkeitsmenge kann dann die von der Förderschnecke 40 zugeführte Befüllmenge an Milchpulver ermittelt und ein entsprechender Kalibrierungsfaktor berechnet werden.

Ist die Förderleistung der Schlauchpumpe 26 anfänglich nicht bekannt, kann anhand der in der Figur 3 veranschaulichten Schritte ein Kalibrierungsfaktor für die Förderleistung der Pumpe berechnet werden. Hierzu wird im Schritt 54 zunächst eine unbekannte Befüllmenge einer Tränkekomponente, bevorzugt Wasser aus der Waserleitung 16, in den Anmischbehälter 12 eingegeben. Auch hier kommt es auf die genaue Befüllmenge nicht an, der sich im Anmischbehälter 12 einstellende Füllstand soll jedoch oberhalb des oberen Füllstandssensors 36 liegen.

Anschließend wird im Schritt 56 die Schlauchpumpe 26 aktiviert, wodurch der Anmischbehälter 12 über die Leitung 22 und die Abzweigleitung 30 entleert wird. Die elektronische Steuerung 18 überwacht dabei die Ausgangssignale des unteren und des oberen Füllstandssensors und erfasst, wann entsprechende Signale abgegeben werden. Der zeitliche Abstand der beiden Signale entspricht der im Schritt 66 erfassten Förderzeit. Anschließend kann die Pumpe im Schritt 62 deaktiviert werden.

Um im Schritt 64 einen Kalibrierungsfaktor für die Förderleistung der Pumpe zu berechnen, wird das durch die Geometrie des Anmischbehälters 12 und die Anordnung der beiden Füllstandssensoren 34, 36 definierte Volumen zwischen den beiden erfassten Füllständen durch die im Schritt 66 erfasste Förderzeit geteilt. Der Kalibrierungsfaktor gibt das entsprechende Verhältnis an und kann insbesondere bei der in der Figur 2 dargestellten Kalibrierung des Tränkeautomaten verwendet werden, um die dem Anmischbehälter 12 im Schritt 42 zugeführten Befüllmengen zu bestimmen.

### Liste der verwendeten Bezugszeichen

- 10: Tränkeautomat
- 12: Anmischbehälter
- 14: Vorratsbehälter für Milchpulver
- 16: Wasserleitung
- 18: elektronische Steuerung
- 20: Auslauf
- 22: Leitung
- 24: Abrufstand
- 26: Schlauchpumpe
- 28: Saugnuckel
- 30: Abzweigleitung
- 32: Rührwerk
- 34: unterer Füllstandssensor
- 36: oberer Füllstandssensor
- 38: Ventil
- 40: Förderschnecke

## Patentansprüche

1. Verfahren zum Kalibrieren eines Tränkeautomaten (10), der mindestens eine Zuführeinrichtung zum Befüllen eines Anmischbehälters (12) mit einer Tränkekomponente und eine elektronische Steuerung (18) aufweist, die dazu ausgebildet ist, zum Zuführen einer gewünschten Befüllmenge der Tränkekomponente einen Befüllzeitraum für die Zuführeinrichtung vorzugeben, wobei das Verfahren die folgenden Schritte aufweist:
• Zuführen der Tränkekomponente für einen vorgegebenen Befüllzeitraum,
• Ermitteln einer in dem vorgegebenen Befüllzeitraum zugeführten Befüllmenge,
• Berechnen eines Kalibrierungsfaktors, der ein Verhältnis aus der ermittelten Befüllmenge und dem vorgegebenen Befüllzeitraum angibt,
wobei der Anmischbehälter (12) mit einer Pumpe zum Fördern von in dem Anmischbehälter (12) hergestellter Tränke verbunden ist, **dadurch gekennzeichnet, dass** die Pumpe eine bekannte Förderleistung aufweist, wobei zum Ermitteln der in dem vorgegebenen Befüllzeitraum zugeführten Befüllmenge der Anmischbehälter (12) mit der Pumpe entleert und die hierfür erforderliche Förderzeit gemessen wird.

2. Verfahren nach Anspruch 1, **dadurch gekennzeichnet, dass** in einem den vorstehenden Verfahrensschritten vorausgehenden Kalibrierungsschritt die Förderleistung der Pumpe ermittelt wird, indem eine definierte Flüssigkeitsmenge mit der Pumpe aus dem Anmischbehälter (12) gefördert und die hierfür benötigte Förderzeit gemessen wird.

3. Verfahren nach Anspruch 2, **dadurch gekennzeichnet, dass** in dem Anmischbehälter (12) zwei Füllstandssensoren (34, 36) in einem vorgegebenen Abstand voneinander angeordnet sind, der der definierten Flüssigkeitsmenge entspricht, wobei die Förderzeit beim Fördern der Flüssigkeit aus dem Anmischbehälter (12) anhand von aufeinanderfolgenden Signalen der Füllstandssensoren (34, 36) ermittelt wird.

4. Verfahren nach einem der Ansprüche 1 bis 3, **dadurch gekennzeichnet, dass** die Pumpe eine Schlauchpumpe (26) ist.

5. Verfahren nach einem der Ansprüche 1 bis 4, **dadurch gekennzeichnet, dass** die Tränkekomponente eine Flüssigkeit ist.

6. Verfahren nach Anspruch 5, **dadurch gekennzeichnet, dass** die Zuführeinrichtung ein Ventil (38) aufweist, das zum Befüllen des Anmischbehälters (12) für den vorgegebenen Befüllzeitraum geöffnet wird.

7. Verfahren nach einem der Ansprüche 1 bis 4, **dadurch gekennzeichnet, dass** die Tränkekomponente ein Pulver ist, wobei vor dem Entleeren des Anmischbehälters (12) zusätzlich zu dem Pulver eine Flüssigkeit zugeführt und mit dem Pulver vermischt wird, wobei die Befüllmenge des Pulvers aus einer bekannten Änderung des Volumens des Flüssigkeits-Pulver-Gemischs relativ zu dem Volumen der Flüssigkeit ermittelt wird.

8. Verfahren nach einem der Ansprüche 1 bis 7, **dadurch gekennzeichnet, dass** die Zuführeinrichtung eine Fördereinrichtung aufweist, die zum Befüllen des Anmischbehälters (12) für den vorgegebenen Befüllzeitraum aktiviert wird.

9. Tränkeautomat (10) mit mindestens einer Zuführeinrichtung zum Befüllen eines Anmischbehälters (12) mit einer Tränkekomponente und einer elektronischen Steuerung (18), die dazu ausgebildet ist, zum Zuführen einer gewünschten Befüllmenge der Tränkekomponente einen Befüllzeitraum für die Zuführeinrichtung vorzugeben und zum Kalibrieren des Tränkeautomaten (10) die folgenden Schritte auszuführen:
• Zuführen der Tränkekomponente für einen vorgegebenen Befüllzeitraum,
• Ermitteln einer in dem vorgegebenen Befüllzeitraum zugeführten Befüllmenge,
• Berechnen eines Kalibrierungsfaktors, der ein Verhältnis aus der ermittelten Befüllmenge und dem vorgegebenen Befüllzeitraum angibt,
wobei der Anmischbehälter mit einer Pumpe zum Fördern von in dem Anmischbehälter (12) hergestellter Tränke verbunden ist, **dadurch gekennzeichnet, dass** die Pumpe eine bekannte Förderleistung aufweist, wobei zum Ermitteln der in dem vorgegebenen Befüllzeitraum zugeführten Befüllmenge der Anmischbehälter (12) mit der Pumpe entleert und die hierfür erforderliche Förderzeit gemessen wird.

10. Tränkeautomat (10) nach Anspruch 9, **dadurch gekennzeichnet, dass** die Pumpe eine Schlauchpumpe (26) ist.

11. Tränkeautomat (10) nach Anspruch 9 oder 10, **dadurch gekennzeichnet, dass** die elektronische Steuerung (18) dazu ausgebildet ist, ein Verfahren nach einem der Ansprüche 2, 3 oder 5 bis 8 auszuführen.

## Claims

1. A method for calibrating a drinking machine (10) which has at least one feeding apparatus for filling a mixing container (12) with a drinking component and an electronic control system (18) which is configured, in order to feed a desired filling quantity of the drinking component, to predefine a filling period for the feeding apparatus, wherein the method has the following steps of:
• feeding the drinking component for a predefined filling period,
• determining a filling quantity fed in the predefined filling period,
• calculating a calibration factor that indicates a relationship between the determined filling quantity and the predefined filling period,
wherein the mixing container (12) is connected to a pump for conveying drinks made in the mixing container (12), **characterized in that** the pump has a known conveying rate, wherein, in order to determine the filling quantity fed in the predefined filling period, the mixing container (12) is emptied with the pump and the conveying time required for this is measured.

2. The method according to Claim 1, **characterized in that** in a calibration step which precedes the above method steps the conveying rate of the pump is determined **in that** a defined quantity of liquid is conveyed with the pump out of the mixing container (12) and the conveying time required for this is measured.

3. The method according to Claim 2, **characterized in that** two filling level sensors (34, 36) are arranged at a predefined distance from one another in the mixing container (12), said distance corresponding to the defined quantity of liquid, wherein the conveying time during conveying of the liquid out of the mixing container (12) is determined on the basis of successive signals of the filling level sensors (34, 36).

4. The method according to any one of Claims 1 to 3, **characterized in that** the pump is a peristaltic pump (26).

5. The method according to any one of Claims 1 to 4, **characterized in that** the drinking component is a liquid.

6. The method according to Claim 5, **characterized in that** the feeding apparatus has a valve (38) which is opened for the predefined filling period in order to fill the mixing container (12).

7. The method according to any one of Claims 1 to 4, **characterized in that** the drinking component is a powder, wherein prior to emptying the mixing container (12) a liquid is fed in addition to the powder and is blended with the powder, wherein the filling quantity of the powder is determined from a known alteration of the volume of the liquid-powder mixture relative to the volume of the liquid.

8. The method according to any one of Claims 1 to 7, **characterized in that** the feeding apparatus has a conveying apparatus which, in order to fill the mixing container (12), is activated for the predefined filling period.

9. A drinking machine (10) having at least one feeding apparatus for filling a mixing container (12) with a drinking component and an electronic control system (18) which is configured, in order to feed a desired filling quantity of the drinking component, to predefine a filling period for the feeding apparatus and, in order to calibrate the drinking machine (10), to carry out the following steps of:
• feeding the drinking component for a predefined filling period,
• determining a filling quantity fed in the predefined filling period,
• calculating a calibration factor that indicates a relationship between the determined filling quantity and the predefined filling period,
wherein the mixing container is connected to a pump for conveying drinks made in the mixing container (12), **characterized in that** the pump has a known conveying rate, wherein, in order to determine the filling quantity fed in the predefined filling period, the mixing container (12) is emptied with the pump and the conveying time required for this is measured.

10. The drinking machine (10) according to Claim 9, **characterized in that** the pump is a peristaltic pump (26).

11. The drinking machine (10) according to Claim 9 or 10, **characterized in that** the electronic control system (18) is configured to carry out a method according to any one of Claims 2, 3 or 5 to 8.

## Revendications

1. Procédé de calibrage d'un abreuvoir automatique (10) présentant au moins un système d'alimentation pour le remplissage d'un récipient de mélange (12) avec un composant de breuvage et une commande électronique (18), laquelle est conçue pour prédéfinir une durée de remplissage pour l'alimentation d'une quantité de remplissage souhaitée du composant de breuvage au profit du système d'alimentation, le procédé comprenant les étapes suivantes :
• alimentation du composant de breuvage pendant une durée de remplissage prédéfinie,
• détermination d'une quantité de remplissage alimentée pendant la durée de remplissage prédéfinie,
• calcul d'un facteur de calibrage indiquant un rapport entre la quantité de remplissage déterminée et la durée de remplissage prédéfinie,
dans lequel le récipient de mélange (12) est relié à une pompe destinée à transporter un breuvage produit dans le récipient de mélange (12), **caractérisé en ce que** la pompe présente un débit connu,
dans lequel, pour déterminer la quantité de remplissage alimentée pendant la durée de remplissage prédéfinie, le récipient de mélange (12) est vidé à l'aide de la pompe et le temps de pompage nécessaire à cette fin est mesuré.

2. Procédé selon la revendication 1, **caractérisé en ce que** dans une étape de calibrage préalable à l'étape de procédé précédente, le débit de la pompe est déterminé en pompant une quantité de liquide définie hors du récipient de mélange (12) à l'aide de la pompe et en mesurant le temps de pompage nécessaire à cette fin.

3. Procédé selon la revendication 2, **caractérisé en ce que** dans le récipient de mélange (12), deux capteurs de niveau de remplissage (34, 36) sont disposés à une distance prédéfinie l'un de l'autre, laquelle correspond à la quantité de liquide définie, le temps de pompage lors du pompage du liquide hors du récipient de mélange (12) étant déterminé à l'aide de signaux consécutifs des capteurs de niveau de remplissage (34, 36).

4. Procédé selon l'une des revendications 1 à 3, **caractérisé en ce que** la pompe est une pompe péristaltique (26).

5. Procédé selon l'une des revendications 1 à 4, **caractérisé en ce que** le composant de breuvage est un liquide.

6. Procédé selon la revendication 5, **caractérisé en ce que** le système d'alimentation présente une soupape (38), laquelle est ouverte pendant la durée de remplissage prédéfinie pour le remplissage du récipient de mélange (12).

7. Procédé selon l'une des revendications 1 à 4, **caractérisé en ce que** le composant de breuvage est une poudre, un liquide étant alimenté en plus de la poudre et mélangé à la poudre avant le vidage du récipient de mélange (12), la quantité de remplissage de la poudre étant déterminée à partir d'une modification connue du volume du mélange liquide-poudre par rapport au volume du liquide.

8. Procédé selon l'une des revendications 1 à 7, **caractérisé en ce que** le système d'alimentation présente un système de transport, lequel est activé pendant la durée de remplissage prédéfinie pour le remplissage du récipient de mélange (12).

9. Abreuvoir automatique (10) comprenant au moins un système d'alimentation destiné à remplir un récipient de mélange (12) avec un composant de breuvage et une commande électronique (18) conçue pour prédéfinir une durée de remplissage pour l'alimentation d'une quantité de remplissage souhaitée du composant de breuvage au profit du système d'alimentation, et pour exécuter les étapes suivantes pour le calibrage de l'abreuvoir automatique (10) :
• alimentation du composant de breuvage pendant une durée de remplissage prédéfinie,
• détermination d'une quantité de remplissage alimentée pendant la durée de remplissage prédéfinie,
• calcul d'un facteur de calibrage indiquant un rapport entre la quantité de remplissage déterminée et la durée de remplissage prédéfinie,
dans lequel le récipient de mélange (12) est relié à une pompe destinée à transporter un breuvage produit dans le récipient de mélange (12), **caractérisé en ce que** la pompe présente un débit connu,
dans lequel, pour déterminer la quantité de remplissage alimentée pendant la durée de remplissage prédéfinie, le récipient de mélange (12) est vidé à l'aide de la pompe et le temps de pompage nécessaire à cette fin est mesuré.

10. Abreuvoir automatique (10) selon la revendication 9, **caractérisé en ce que** la pompe est une pompe péristaltique (26) .

11. Abreuvoir automatique (10) selon la revendication 9 ou 10, **caractérisé en ce que** la commande électronique (18) est conçue pour mettre en oeuvre un procédé selon l'une des revendications 2, 3 ou 5 à 8.
